# EUROPEAN PATENT APPLICATION

(11) **EP 1 900 502 A1**
(43) Date of publication of application: **19.03.2008**
(21) Application number: 07115640.0
(22) Date of filing: 04.09.2007
(51) Int. Cl.: B29C 70/34

(54) **Method for making composite corner**

(30) Priority: 13.09.2006 US 531369
(71) Applicant: General Electric Company, Schenectady, NY 12345 (US)
(72) Inventor: Blanton, Lee Alan, Cincinnati, OH 45243 (US); Wilkerson, Paul Edward, Edgewood, KY 41017 (US)
(74) Representative: Bedford, Grant Richard

(57) **Abstract**

A method for making a composite gas turbine engine component, the method includes providing a tool (100) having a first and second surface, the first and second surface arranged at an angle to each other. A fibrous segment (302) is applied to the first surface. The fibrous segment (302) has an end terminating adjacent to the angle between the first surface and the second surface. A fibrous preform (301) is positioned on the fibrous segment (302) and on the second surface. A matrix material is then provided on one or more of the fibrous preform (301) or the fibrous segment (302). The fibrous segment (302) and fibrous preform (301) are heated to a temperature sufficient to allow expansion of the end of the fibrous segment (302). The matrix material is then cured to form a composite article having an angular portion having substantially uniform fiber distribution.

## Description

This invention relates generally to composite articles and methods for making composite articles. In particular, the present invention involves angular portions of composite annular gas turbine engine components.

Aircraft engine design continually requires components of aircraft engines to have lighter weight materials to increase the aircraft's fuel efficiency and thrust capabilities. In the past, aircraft components have been made with steel. However, steel is relatively heavy and has been replaced with lighter weight high strength materials, such as aluminum or titanium. A further development in producing lightweight parts has resulted in the advent of non-metallic materials, such as composites comprising graphite fibers embedded within a polyimide resin. Composite materials are materials that include embedded fibers inside of a matrix material. The fibers provide reinforcement for the matrix material. The fiber structure prior to being embedded in the matrix is generally referred to as a preform. Graphite fibers embedded within resin systems have drawbacks, including difficulty molding the material into parts, high porosity, microcracking, delamination, and expensive equipment and processes.

Graphite epoxy composite fan ducts have been manufactured using a cross-over tool, disclosed in U.S. Patent 5,145,621 to Pratt (the '621 Patent). In the '621 Patent woven graphite fiber preform is mounted on a large spool to form a graphite epoxy composite fan duct. The fibers are situated to provide a flange at either end of the spool. The shape of the spool substantially defines the final shape of the finished composite. The cross-over tool pulls the fibers of the graphite on a spool to provide tension. The tool pulls the fiber through the use of a complex spider tool that encircles the flange portion of the fibers and provides pressure when in combination with three independent vacuum envelopes. The drawbacks of the cross-over tool and method disclosed in the '621 Patent includes a complicated process, and an expensive tool that is difficult to use.

Graphite epoxy composite fan cases have also been manufactured using a mold system utilizing a elastomeric material to assist in providing a force on plies of reinforcing material during manufacture, disclosed in U.S. Patent 5,597,435 to Desautels et al. (the '435 Patent). To produce a composite matrix, uncured fiber-reinforced prepreg-type plies (i.e., plies) are mounted onto a mold. Prepreg plies are plies that are impregnated with uncured matrix material before being mounted on the mold. A forcing member and restraining member are placed onto the plies to hold the plies in place. The forcing member is placed between the restraining member and the plies on the mold. The mold, plies, restraining member and forcing member are placed into a furnace and heated. As the assembly is heated, the forcing member uniformly expands and a uniform pressure is applied to the plies. The result is that the plies are compacted as the temperature is raised. The '435 Patent process has the drawback that it only debulks the material and does not pull taut the fabric to provide fiber orientation that provides the finished composite with high strength and uniformity.

Known methods for making composite fan casings suffer from the drawback that the flange corners have increased resin density with respect to composite body, which results in lower compression strength for the flange. Specifically, the larger resin density results in micro-cracking from thermo-shrinkage during manufacture and during operation. Increased resin density with respect to fiber reinforcement provides insufficient transfer of stresses to the reinforcement material, which may result in micro-cracking or premature failure of flanges.

In order to mitigate the problem of increased resin density, fibers have been twisted and distributed within the space of anticipated increased resin density. The twisted fiber recoils substantially randomly within the space during curing. However, the twisted fibers suffer from the drawback that they do not provide adequate fit to the space, resulting in areas that still have increased resin density. Also, the random distribution results in misalignment of the fiber and some loss in strength due to a portion of the fibers being oriented perpendicular to each other. Further, the material within the space of the flange has an inconsistent fiber distribution, leading to nonuniform properties.

What is needed is a method for reducing or eliminating areas of high resin density at the flange corners of annular gas turbine engine components.

Aspects of the present invention include a gas turbine engine component and a method for making a composite gas turbine engine component, the method including providing a tool having a first and second surface, the first and second surface arranged at an angle to each other. A fibrous segment is applied to the first surface. The fibrous segment has an end terminating adjacent to the angle between the first surface and the second surface. A fibrous preform is positioned on the fibrous segment and on the second surface. A matrix material is then provided on one or more of the fibrous preform or the fibrous segment. The fibrous segment and fibrous preform are heated to a temperature sufficient to allow expansion of the end of the fibrous segment. The matrix material is then cured to form a composite article having an angular portion having substantially uniform fiber distribution.

Another aspect of the invention includes a composite article for use in a gas turbine engine having a fiber reinforced resin with a geometry having one or more surfaces configured at an angle to each other. The fiber reinforced resin includes a fiber density within the reinforced resin is substantially uniform in the area of the angle and the area of the angle is resistant to both compressive and tensile loads.

The method and tool of an embodiment of the present invention forms a lightweight reinforced matrix composite material suitable for use as composite containment ducts, such as fan casings, vanes, and struts having flanges that exhibit high strength and compositional uniformity.

The method according to an embodiment of the present invention is particularly suitable for fabrication of large composite parts, including cylindrical parts having a diameter of greater than about 5 feet, including parts having a diameter of about 10 feet. An advantage of the present invention is that the flanges are suitable for retaining large parts, such as large composite fan casings, and maintaining their containment properties.

The method according to an embodiment of the present invention provides a method for manufacturing fiber reinforced matrix composites that has a high uniformity of composition and less defects, such as areas of high resin density.

The method according to an embodiment of the present invention allows the fabrication of flanged components having less scrapped and/or repaired parts due to the increased consistency the material at or near the flanges.

Various features and advantages of the present invention will be apparent from the following more detailed description of the preferred embodiment, taken in conjunction with the accompanying drawings which illustrate, by way of example, the principles of the invention, and in which:
FIG. 1 is a perspective view of a tool for forming a composite containment duct according to an embodiment of the present invention.
FIG. 2 is a side view of a tool for forming a composite containment duct according to an embodiment of the present invention
FIGS. 3 and 4 are cross sectional views of alternate embodiments of a first portion of a tool for forming a composite containment duct according to an embodiment of the present invention.
FIG. 5 is a cross sectional view of a second portion of a tool for forming a composite containment duct according to an embodiment of the present invention.
FIG. 6 shows a tool for forming a composite containment duct according to an embodiment of the present invention prior to heating.
FIG. 7 shows an exploded view of area 600 from FIG. 6.
FIG. 8 shows a tool for forming a composite containment duct according to an embodiment of the present invention during and after heating.
FIG. 9 shows an exploded view of area 800 from FIG. 6.
FIGs. 10 and 11 show a tool for forming a composite containment duct according to an embodiment of the present invention during heating.
FIG. 12 is a perspective view of a composite containment duct according to an embodiment of the present invention.
FIG. 13 shows a portion of a biaxial woven fabric.
FIG. 14 shows a perspective view of an alternate composite article according to an embodiment of the present invention.
FIG. 15 is cross-sectional view taken in direction 15-15 of FIG. 14.
FIG. 16 is an exploded view of area 1500 of FIG. 15 prior to heating.
FIG. 17 is an exploded view of area 1500 of FIG. 15 during and after heating.
Wherever possible, the same reference numbers will be used throughout the drawings to refer to the same or like parts.

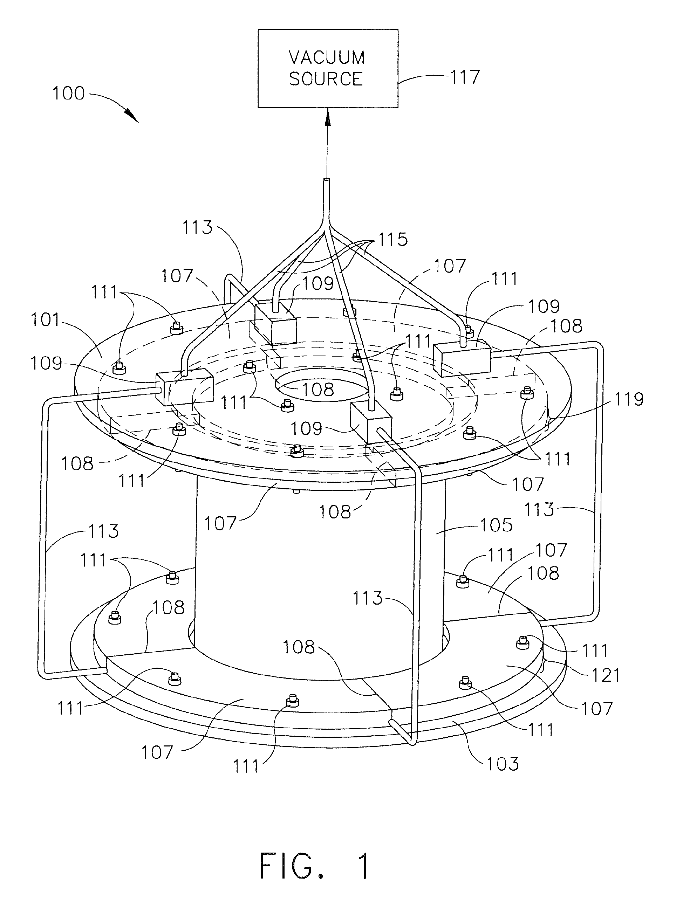

FIG. 1 shows a composite duct-forming tool 100 for forming a composite containment duct according to various embodiments of the present invention. The tool 100 includes a substantially cylindrical body 105. A first endplate 101 and a second endplate 103 are positioned adjacent to the opposed planar ends of the body 105. The body 105 and first and second endplates 101 and 103 are fabricated from a material having a greater thermal coefficient of expansion than the workpiece held by the tool 100. Material for the body 105 and first and second endplates 101 and 103 include, but are not limited to, metals or alloys. Suitable materials for the body 105 include aluminum and steel. The first endplate 101 is fastened to the body 105 with stress relief fasteners 111. The second endplate 103 adjacent to the body 105 is attached to the body 105. The body 105 has a substantially cylindrical geometry. The substantially cylindrical body 105 preferably tapers from a smaller diameter adjacent to the first endplate 101 to a larger diameter at the second endplate 103. Although FIG. 1 illustrates a cylindrical body 105, the body is not limited to a cylindrical shape. Alternate geometry for the body include, but are not limited to, rectangular, oval, and triangular geometries. In an alternate embodiment, the body 105 has substantially cylindrical geometry with a smaller diameter at the midpoint between the first and second endplates 101 and 103 and a larger diameter at each of the ends of the body 105. The body 105 may be fabricated in multiple detachable pieces to facilitate removal of finished reinforced matrix composite parts.

FIG. 1 shows a first set of flange shoes 119 positioned adjacent to the first endplate 101 circumferentially around the body 105 on the surface of the first endplate 101 nearest to the second endplate 103. A second set of flange shoes 107 are positioned adjacent to the second endplate 103 circumferentially around the body 105 on the surface of the second endplate 103 nearest to the first endplate 101. The flange shoes 107 of each of the first and second set of flange shoes 119 and 121 contact each other at a flange shoe junction 108. Flange shoes 107 are plates fabricated from a material having a greater thermal coefficient of expansion than the workpiece held by the tool. Material for the flange shoes 107 include, but are not limited to, metals or alloys. Suitable materials for the flange shoes 107 include aluminum and steel. The flange shoes 107 are fastened to the first and second endplates 101 and 103 by stress relief fasteners 111. In addition to fastening the first and second endplates 101 and 103, the stress relief fasteners 111 also fasten the first endplate 101 to the body 105. As shown in FIG. 1, the stress relief fasteners 111 fastening the flange shoes 107 extend through the first and second endplates 101 and 103 and through the flange shoes 107. The stress relief fasteners 111 fastening the first endplate 101 to the body 105 extend through the first endplate 101 and into the body 105. The stress relief fasteners 111, according to the present invention, are any fasteners capable of positioning the first endplate 101 and the flange shoes 107 of the first and second flange shoe sets 119 and 121 during the loading of the workpiece, but yield to pressure due to thermal expansion or other forces. Stress relief comes when the fasteners holding the flange shoes 107 yield under appropriate radial stress and the fasteners holding the end flange plate yields to relieve the axial stress. Suitable materials for stress relief fasteners 111 include, but are not limited to, nylon. One or more reservoirs 109 are located on the surface of the first endplate 101. The reservoirs 109 fluidly communicate with a vacuum source via vacuum lines 115. The reservoirs 109 are shown as separate components, but they may be manufactured integral to the first endplate 101.

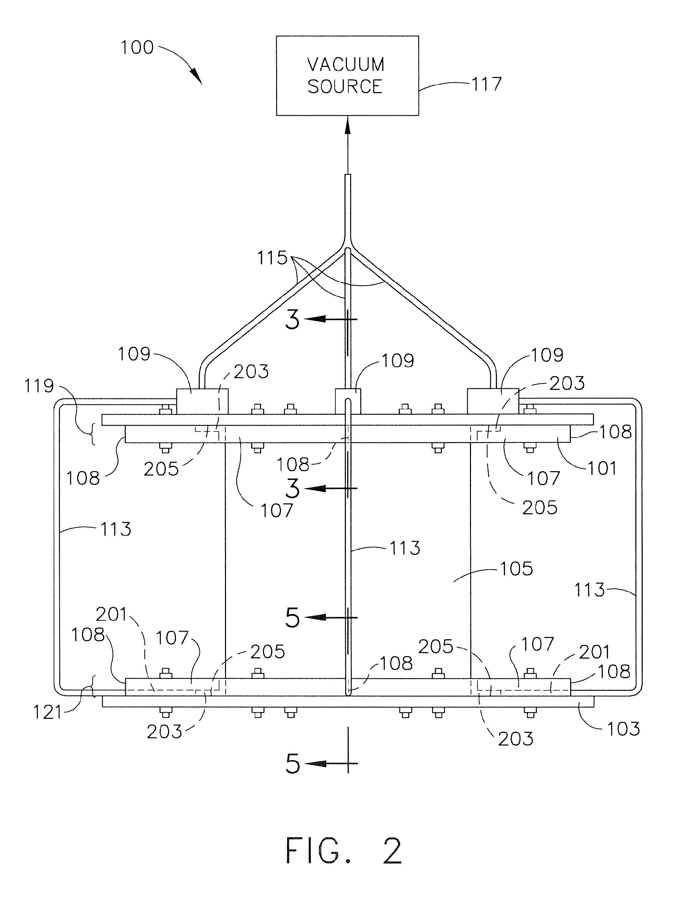

FIG. 2 illustrates one embodiment of the tool 100 oriented with the first and second endplates 101 and 103 illustrated horizontally on the drawing. The orientation shown in FIG. 2 illustrates the embodiment of the invention wherein the tool 100 is loaded into an autoclave with the first endplate 101 oriented substantially horizontally above the second endplate 103 and with the center axis of the body 105 being oriented substantially in the vertical direction. Although this embodiment refers to an autoclave, any chamber having the ability to heat and provide pressure to the tool is suitable for use with the present invention. FIG. 2 shows the flange shoes 107 arranged circumferentially around the body 105. A first set of flange shoes 119 are fastened to the first endplate 101 on the surface nearest to the second endplate 103. A second set of flange shoes 121 are fastened to the second endplate 103 on the surface nearest to the first endplate 101.

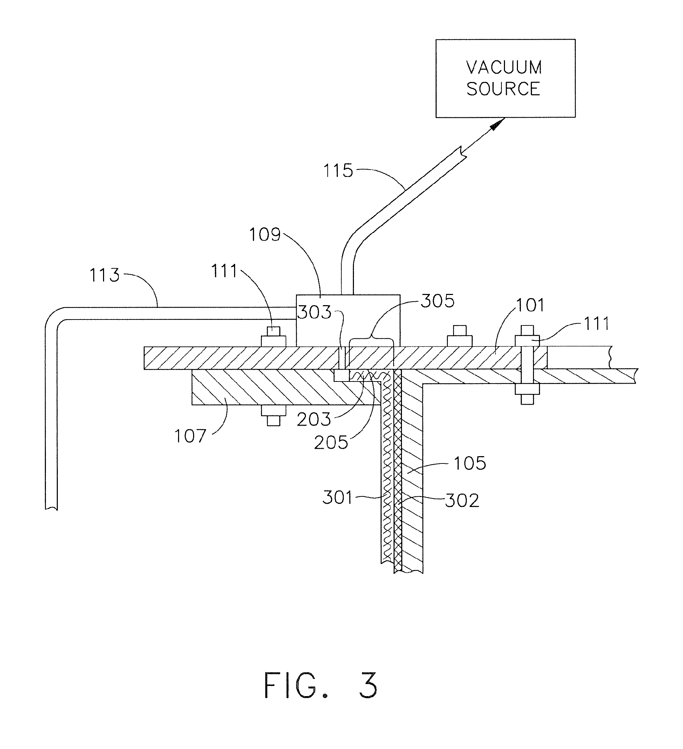

A channel 201 is machined in flange shoe junction 108 between individual flange shoes 107 along the surface adjacent to the second endplate 103 to form a fluid connection from the inner surface 205 adjacent to the body 105 to the outer periphery of the flange shoe junctions 108. At the outer periphery of the flange shoe junction 108, a siphon tube 113 is attached and placed in fluid connection with the channel 201 adjacent to the second endplate 103. The siphon tube 113 is in fluid connection with a reservoir 109 adjacent to the first endplate 101. Each reservoir 109 is a hollow chamber that is capable of containing matrix material under vacuum. Each reservoir 109 is in fluid connection with a cavity 203 defined by the flange shoes 107, the lower surface of the first endplate 101 and the inner surface 205 of body 105. The cavity 203 is of sufficient volume to permit insertion of a portion of a workpiece (shown as fiber fabric 301 and fabric insert 302 in FIGs. 3-5). The workpiece is preferably a portion of a reinforcing fiber fabric. The reservoirs 109 are also in fluid connection with a vacuum source 117 through vacuum lines 115. The vacuum source 117 provides vacuum to the reservoirs 109 to draw vacuum on the material in reservoirs 109.

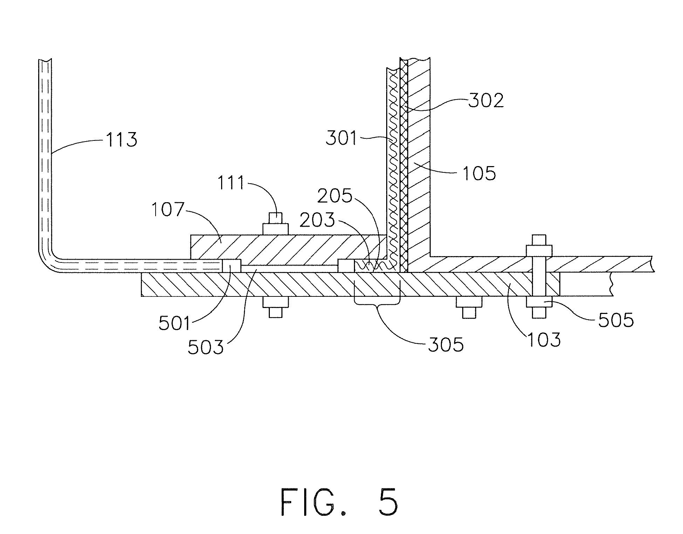

FIG. 3 shows a cross sectional view representing view 3-3 in FIG. 2. The cross section shown in FIG. 3 provides an enlarged view of a portion of the first endplate 101 wherein the first endplate 101 is oriented horizontally in the drawing. The first endplate 101 and body 105 are loaded with a fiber fabric preform 301 and a fabric insert 302. The fabric insert 302 is preferably applied to the body 105 first and is configured to terminate at first endplate 101 and second endplate 103 (see also FIG. 5). Fabric insert 302 is preferably a woven fibrous material a biaxial weave in the form of a fabric or fabric segment. Suitable fibers for forming the fiber fabric insert 302 include, but are not limited to, carbon, graphite, glass and polyamide fibers. The fibers making up the fabric insert 302 are preferably graphite fibers. A preferred fabric insert 302 includes biaxial weave including two 3k (i.e., 3,000 strand) fiber bundles in the + 45° direction from a central axial direction and two 3k fiber bundles in the - 45° direction from the tow in the axial direction. The fabric insert 302 may be in the form of a biaxial fabric or fabric segment or other arrangement that permits the reinforcement final cured composite product. The fiber fabric preform 301 is mounted on tool 100 in a manner that includes a flange portion 305 that extends from the body 105 and away from the fabric insert 302 along the first endplate 101. Flange shoes 107 are fastened to the first endplate 101 with a stress relief fastener 111. Likewise, the first endplate 101 is fastened to the body 105 with a stress relief fastener 111.

FIG. 3 shows the fiber fabric preform 301 and fabric insert 302 positioned along the body 105. The fiber fabric perform 301 includes a portion angled at an angle of about 90° to form a flange shape in the cavity 203 defined by the flange shoes 107, the first endplate 101 and the inner surface 205 of the body 105. The fabric insert 302 is positioned between the fiber fabric preform 301 and the body 105. The fabric insert 302 provides an end adjacent to first endplate 101 that is capable of expansion when heated. The expansion may include unraveling of individual fibers at the end of the fabric insert. Cavity 203 defined by flange shoes 107, first endplate 101 and body 105 is in fluid communication with the reservoirs 109 through a matrix material distribution channel 303. The reservoirs 109 are in fluid communication with at least one vacuum line 115 and at least one siphon tube 113.

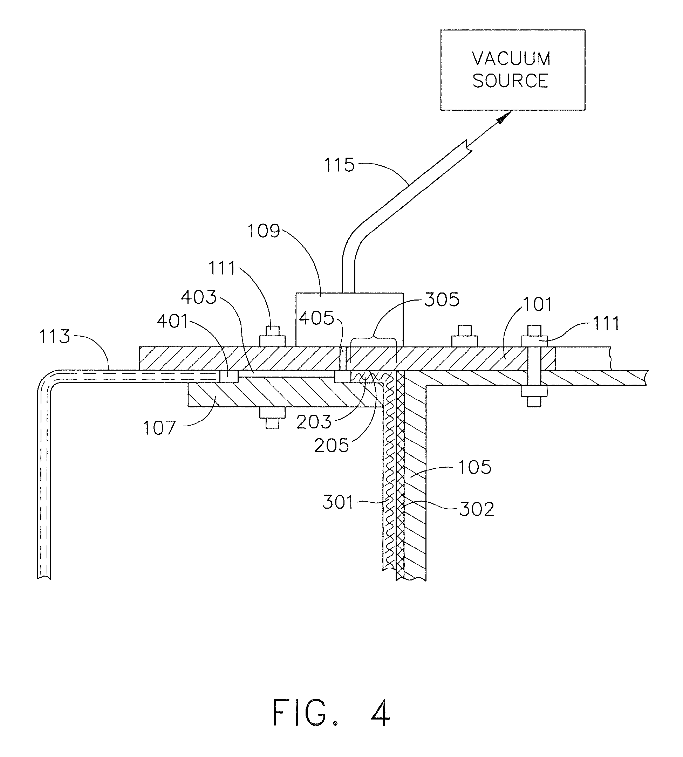

FIG. 4 shows a cross sectional view representing view 3-3 in FIG. 2. The sectional view shows a portion of the composite duct-forming tool 100 having the same arrangement of body 105, flange shoes 107, fiber fabric preform 301, fabric insert 302 and first endplate 101 as FIG. 3. However, the embodiment illustrated in FIG. 4 has the siphon tube 113 inserted into a siphon tube recess 401 in the flange shoes 107. The siphon tube 113 is in fluid communication with a matrix material distribution channel 403. The matrix material distribution channel 403 extends from the siphon tube 113 to the cavity 203 defined by the flange shoes 107, the first endplate 101 and the inner surface 205 of the body 105. Cavity 203 defined by flange shoes 107, first endplate 101 and inner surface 205 of body 105 is in fluid communication with reservoirs 109 through reservoir channel 405. The reservoirs 109 are in fluid communication with a vacuum source 117 via vacuum line 115.

FIG. 5 shows a cross sectional view representing view 5-5 in FIG. 2. The cross section shown in FIG. 5 provides an enlarged view of a portion of the second endplate 103 oriented horizontally in the drawing, loaded with a workpiece of fiber fabric preform 301 and fabric insert 302. FIG. 5 also shows flange shoes 107 fastened to the second endplate 103 with a stress relief fastener 111. The second endplate 103 is fastened to the body 105 by a second endplate fastener 505. The second endplate fastener 505 is a fastener that does not yield under pressure, like the stress relief fastener 111. The second endplate fastener 505 may be any fastener that does not yield under the stresses generated by the tool 100. In an alternate embodiment, the second endplate 103 and the body 105 may be permanently attached or a machined single piece. In this alternate embodiment, the second endplate 103 is integral to the body 105 and may be machined or cast as a single piece having the body 105 extend from the second endplate 103. Alternatively, the body 105 and the second endplate 103 may be welded together.

The embodiment illustrated in FIG. 5 has the siphon tube 113 inserted into a siphon tube recess 501 in flange shoes 107. The siphon tube 113 is in fluid communication with a matrix material distribution channel 503. The matrix material distribution channel 503 extends from the siphon tube to cavity 203 defined by flange shoes 107, second endplate 103 and inner surface 205 of body 105.

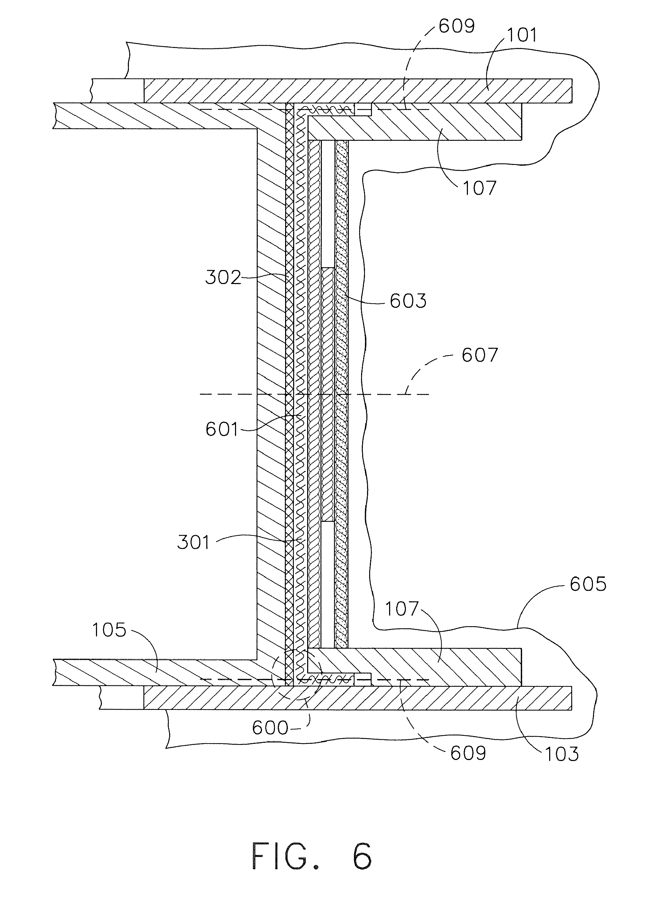

FIG. 6 shows a composite duct-forming tool 100 for forming a composite containment duct according to the present invention loaded with the fabric preform 301, fabric insert 302 and matrix material 601 to be formed into a composite prior to being loaded into the autoclave or other controlled atmosphere device. To load tool 100 into the configuration shown in FIG. 6, one or both of the first or second endplates 101, 103 is first removed. The fabric insert 302 is placed upon the body 105. Additional coating, or protective layers may also be applied prior to after the fabric insert 302, but are not required. In one embodiment, the fabric insert 302 may be a tubular fabric segment that may be expanded to the diameter of the body 105 and snugly fit onto the surface of the body 105. The fabric insert 302 is cut to a length allowing each end of the fabric insert 302 to abut both the first and second endplates 101, 103 when attached. In order to cut the fabric insert 302, the fabric insert 302 is brought into contact with a quantity of matrix material or other resin sufficient to immobilize or tackify the fibers. The tackiness need only be sufficient enough to allow cutting of the fabric insert 302 desired lengths without significant expansion. If insufficient resin is utilized, the fibers within the fabric insert 302 may prematurely unravel and expand to a volume making positioning of the fabric insert 302 on the tool 100 difficult.

On the fiber fabric preform 301 overlying fabric insert 302, a layer of matrix material 601 is placed on the surface. The matrix material 601 is preferably bulk resin weighed out into discrete portions. Bulk resin is uncured resin that has not been processed into a final form (e.g., sheets or plies) and is capable of being separated into discrete portions. At room temperature, the bulk resin is preferably a pliable solid.

The bulk resin is separated into substantially rectangular portions, which are placed on the surface of the fiber fabric preform 301. It is noted that any shape portion that provides resin to the surface of the fiber fabric preform 301 is suitable for use with the invention. After placing the portions onto the surface of the fiber fabric preform 301, the rectangular portions are conformed to the surface shape. The rectangular portions are preferably pliable at room temperature. The rectangular sections of bulk resin may optionally be pre-heated to increase the pliability of the resin to assist in conforming the rectangular portions to the surface shape. A suitable resin may include, but is not limited to, epoxy or polyamide resin. The matrix material 601 is coated onto the surface of the fiber fabric preform 301 so that a greater amount of matrix material 601 (i.e., a greater amount of matrix material per unit of surface area) is coated onto the center 607 of the fiber fabric preform 301 (i.e., the midpoint between the first and second endplates 101 and 103) and a lesser amount (i.e., a lesser amount of matrix material per unit of surface area) is coated on the edges 609 of the fiber fabric preform 301 (i.e., the area adjacent the first and second endplates 101 and 103). Although this embodiment refers to bulk resin, any matrix material capable of forming a reinforced matrix composite may be used with the present invention. The matrix material 601 may be the same or different than the material utilized to immobilize the fibers of the fabric insert 302.

After the tool 100 is loaded with the matrix material 601, an elastomer caul 603 is placed onto the matrix material 601coated fiber fabric preform 301. The caul 603 is formed from a material that is a barrier to the passage of matrix material 601. Suitable material for the caul 603 includes, but is not limited to, silicone. Any material which will not bond with the matrix material and which can withstand the heat and pressure and is flexible may be used as the material for the caul 603. The caul 603 is positioned so that the matrix material 601 may only travel into and along the fiber fabric preform 301 and fabric insert 302, into the area adjacent to the first and second endplates 101 and 103 where the matrix material 601 may enter the matrix material distribution channels 503 or the matrix material distribution and vacuum channels 303, 403 and 405, the siphon tubes 113 or the reservoirs 109, as illustrated in FIGs. 1-5. Once the fabric insert 302, fiber fabric preform 301, matrix material 601 and caul 603 are positioned, the endplates 101, 103 and flange shoes 107 are fastened into the position shown in FIG. 6. Once the tool 100 is loaded, the loaded tool 100 is placed inside a vacuum bag 605.

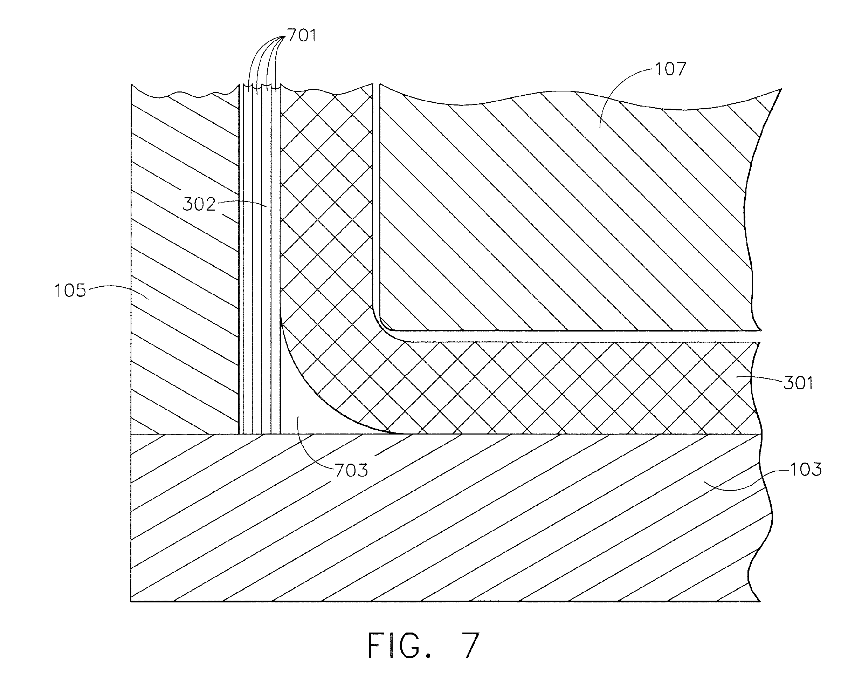

FIG. 7 shows an exploded view of area 600 of FIG. 6. As shown in FIG. 7, the fiber fabric preform 301 conforms to a portion of the surface of the second endplate 103 and a portion of the surface of body 105 to form an angle. The fabric insert 302 is positioned along the surface of body 105 and terminates adjacent to the second endplate 103. The fabric insert 302 is made up of a plurality of plies 701, which are built up to increase the thickness of the layer forming the fabric insert 302. Although FIG. 7 shows four plies, any number of plies may be used and may be selected to provide a greater or smaller thickness or a greater or smaller number of fibers. When the fiber fabric preform 301 and the fabric insert 302 are loaded on tool 100, a gap 703 may be formed due to the angle between the surface of the second endplate 103 and the surface of the body 105. The gap 703 includes any area into which resin may flow to form pockets of increased resin density. The fabric insert 302 is selected to include fibers that will expand to fill gap 703 when the apparatus is heated. The fabric insert 302 material may include, but is not limited to, carbon, graphite, glass and polyamide fibers. Fibers within the fiber insert 302 are arranged to expand when exposed to no resin or resin having low viscosity, such as heated resin. Suitable fiber arrangements for expansion include biaxial graphite fiber. The fiber preferably includes two 3k (i.e., 3,000 strand) fiber bundles in the + 45° direction from a central axial direction and two 3k fiber bundles in the - 45° direction from the tow in the axial direction. The expansion of the fabric insert 302 takes place by any suitable mechanism, including fiber memory, released compressional forces within the tows, or any other forces that permit unraveling of the fiber tows within the fabric insert 302. The expansion is such that fibers substantially uniformly fill the gap 703 when the apparatus is heated and the viscosity of the resin used to tackify the ends of the fabric insert 302 is reduced.

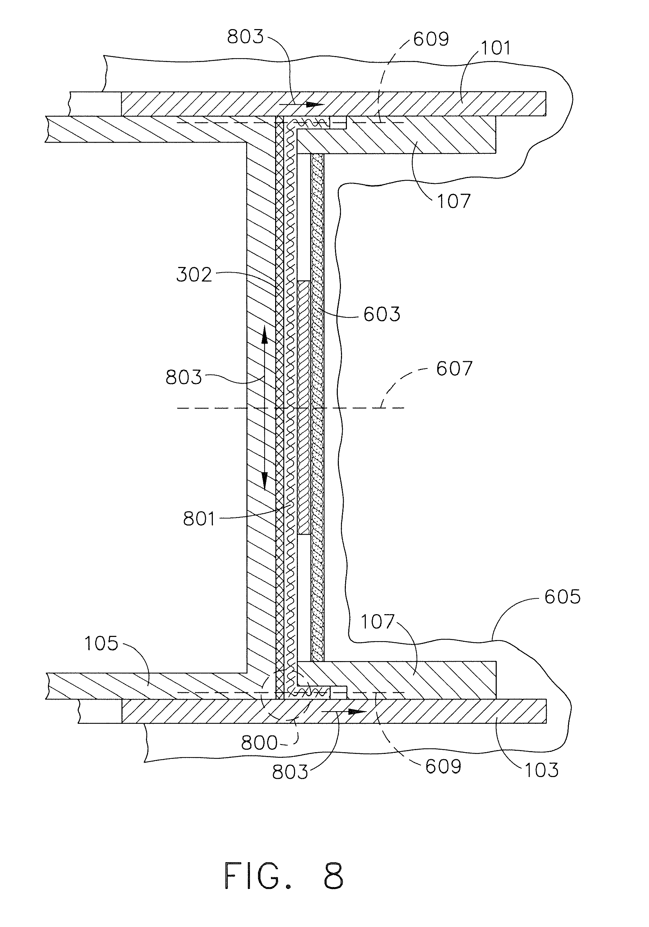

FIG. 8 illustrates the tool 100 and the movement of matrix material 601 (illustrated in FIG. 6) when exposed to heat, during heating and holdings steps of a curing cycle. The matrix material 601 upon heating becomes liquid or fluid and begins to infiltrate the fiber fabric preform 301 to create a partially impregnated fiber fabric preform 801. As the matrix material 601 becomes liquid or fluid, the material flows from the center 607 of the fiber fabric preform 301 and the fabric insert 302 (i.e., the midpoint between the first and second endplates 101 and 103) in the direction of arrows 803. As the matrix material 601, now a liquid resin, moves from the center 607 of the fiber fabric preform 301 and the fabric insert 302 to the outer edges 609, air, volatile gases devolve from the matrix material 601, and other materials, such as impurities or gases trapped in the fiber fabric preform 301 and the fabric insert 302, that potentially could cause void space are pushed by the flow of bulk matrix material 601 toward the outer edges 609 of the fabric adjacent to the first and second endplates 101 and 103. The matrix material 601 also flows into the corners formed by the junction of the first and second endplates 101,103 and the body 105. Because the viscosity of the matrix material 601 is reduced, the fibers at the cut end of the fabric insert 302 are permitted to expand to fill gap 703. Excess matrix material 601, air, volatile gases from the bulk matrix material 601 and other materials that potentially could cause void space flow into the siphon tube 113 are drawn into either the reservoirs 109 or into cavity 203 defined by flange shoes 107, second endplate 101 and inner surface 205 of the body 105 through the matrix material distribution channel 403, as illustrated in FIGS. 1-5.

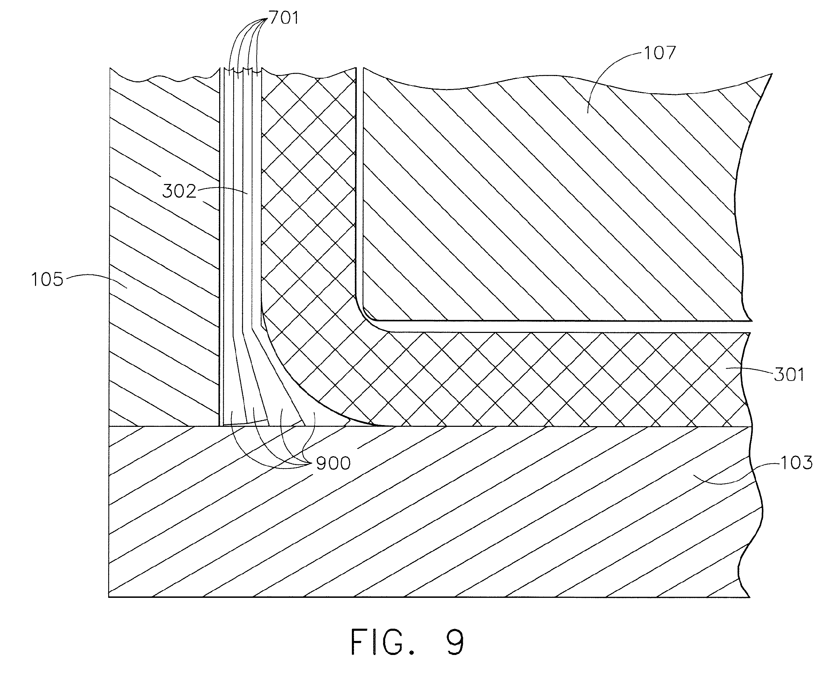

FIG. 9 shows an exploded view of area 800 of FIG. 8. The arrangement shown in FIG. 9 is the same as the arrangement shown in FIG. 7. However, as the tool 100 is heated, the viscosity of the material utilized to immobilize the fibers at the end of the fabric insert 302 is reduced with increased temperature and the plies adjacent to the gap 703 expand via unraveling or similar mechanism to fill the gap 703 with partially unraveled fiber 900. The expansion permits the corner of the cured composite to have a substantially uniform distribution of fiber within the matrix material. The unraveled fiber 900 preferably has a controlled expansion that is dependent on the temperature and resultant matrix material viscosity, the type of weave or fabric segment utilized, and the fiber material.

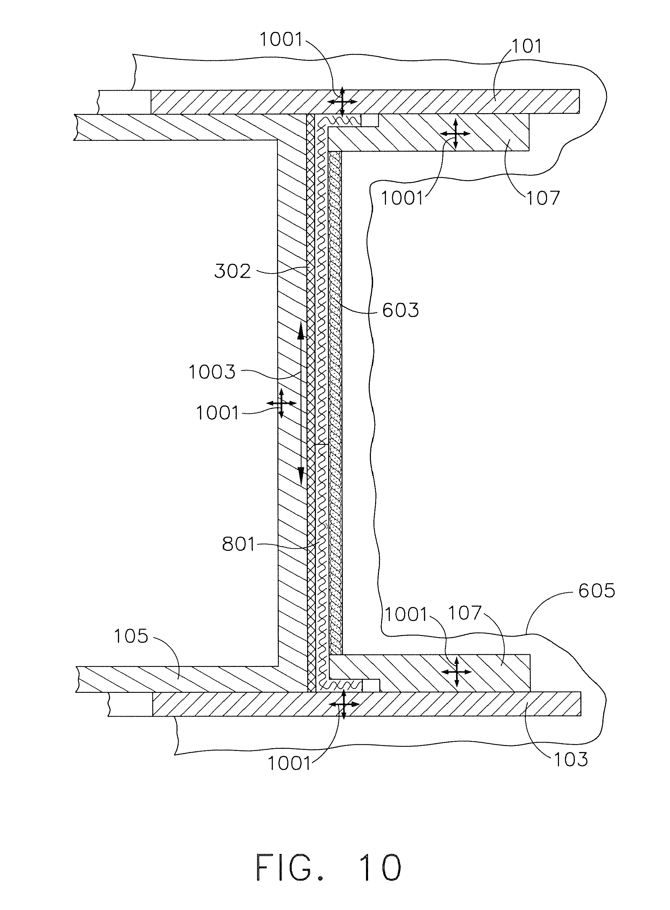

FIG. 10 illustrates the tool 100 and partially impregnated fiber fabric preform 701 when exposed to heat, during the heat up and hold steps of the curing cycle. The first endplate 101, second endplate 103, the body 105, and the flange shoes 107 are fabricated from a material that has a greater thermal coefficient of expansion than the partially impregnated fiber fabric preform 801. As a result, during heat-up, as shown in FIG. 8, each of the first endplate 101, second endplate 103, the body 105, and the flange shoes 107 expand in all directions as shown by arrows 1001. The partially impregnated fiber fabric preform 801 expands very little in comparison to the body 105. The difference in the amount of thermal expansion of the tool 100 against the partially impregnated fiber fabric preform 801 results in a tensional force shown by arrows 1003 that acts to pull the partially impregnated fiber fabric preform 801 taut. Fiber fabric preforms 801 that are pulled taut before matrix material curing provide uniform materials with high strength substantially free of waves and wrinkles. The fabric insert 302 expands, as shown in FIG. 9, and fills adjacent spaces with fiber for reinforcement.

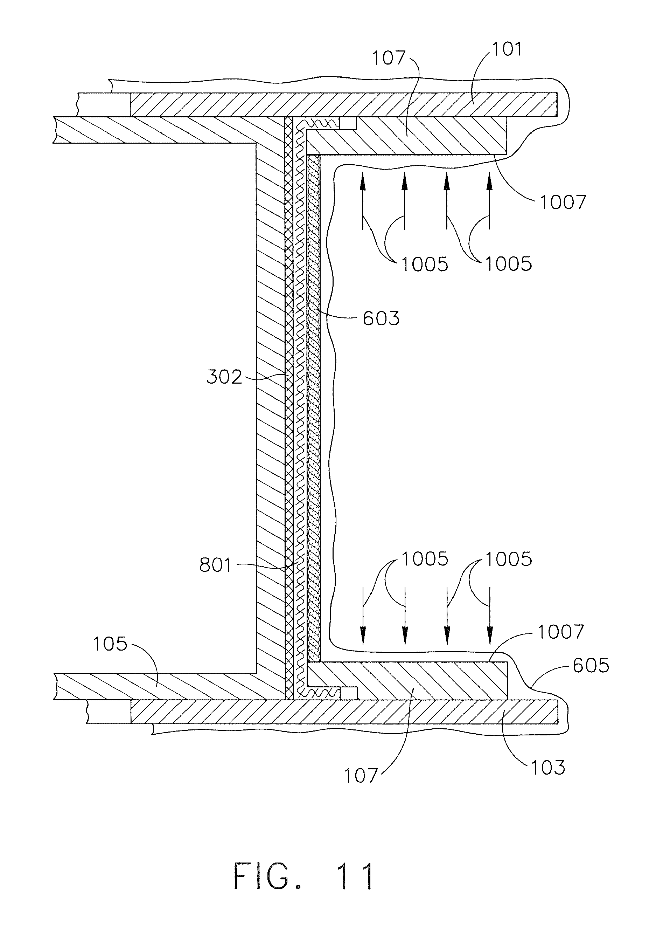

FIG. 11 illustrates the tool 100 when exposed to pressure, during the heat up and hold steps of the curing cycle. Flange shoes 107 are fabricated with a large surface area 1007 in the plane parallel to the first and second endplates 101 and 103. As the pressure in the autoclave is increased during the curing cycle, the resulting force of the autoclave atmosphere shown by arrows 1005 on the vacuum bag 605 and flange shoes 107 surface acting against the surface area 1007 of flange shoes 107 is increased. The larger surface area 1007 selected for flange shoes 107, the larger the force provided by the action of the vacuum. Flange shoes 107 surface is greater in surface area 1007 than the fiber fabric preform 301 forming the flange-like shape so as to add substantial position holding force from autoclave pressure. The pressure holds the fiber fabric preform 301 in place while the body 105 expands and pulls the fiber fabric preform 301 taut. The curing cycle is continued until the resin is sufficiently distributed and matrix material has been cured.

FIGs. 6-11 illustrate various stages in the matrix material infiltration and curing process. FIG. 6 illustrates the tool 100 before loading into the autoclave (not shown).
FIG. 7-10 illustrate the tool 100 during heating. FIG. 11 illustrates the tool 100 under autoclave pressure. FIGs. 6-11 shows cross sections taken radially from the center axis of the cylinder portion of the body 105 of the tool 100 shown in FIGs. 1 and 2.

FIGs. 6-11 illustrate the tool 100 having a body 105, a first endplate 101, a second endplate 103, and flange shoes 107, arranged as shown in FIGs. 1 and 2. For illustration purposes, FIGs. 6-11 do not show the stress relief fasteners 111 and 505, the siphon tubes 113, the reservoirs 109, the vacuum lines 115, the matrix material distribution channels 503 or the matrix material distribution and vacuum channels 303, 403 and 405. It is noted that each of the above element are present in the tool 100 loaded into the autoclave, as well as a vacuum membrane or bag 605 surrounding the tool 100.

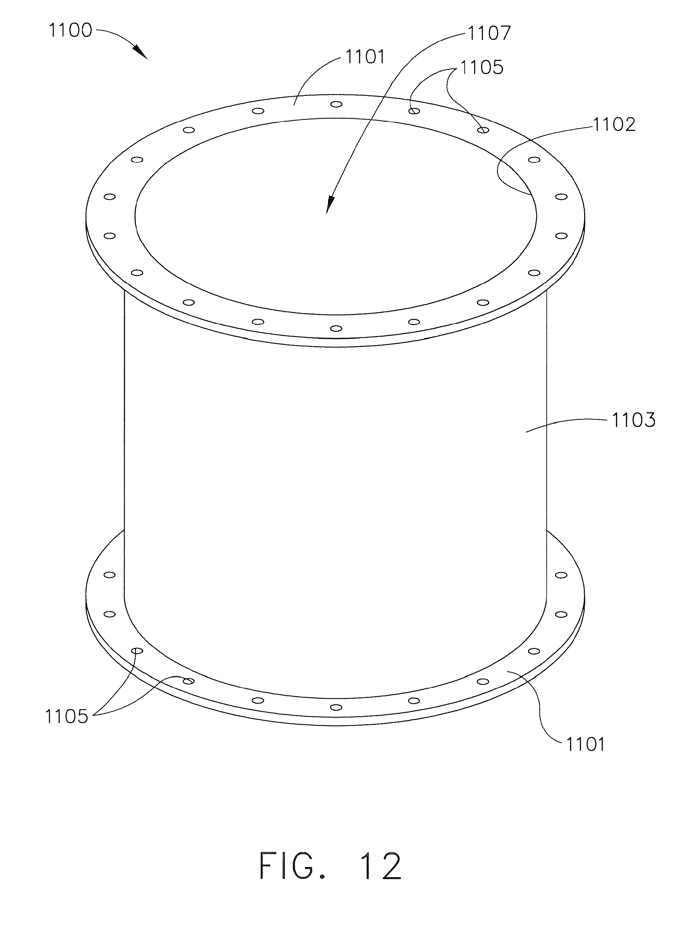

FIG. 12 illustrates a composite containment duct 1100 according to an embodiment of the present invention. Composite containment duct 1100 is the product made by tool 100 (see FIGs. 1-2). Composite containment duct 1100 is a single piece having a duct body 1103 and integral high strength flanges 1101. The strength of the flanges 1101 is important for the function of the composite containment duct 1100. For example, the containment duct 1100 may be suitable for containment of fan blades of a fan of a gas turbine engine. The flanges have corners 1102 that have substantially uniform distribution of fiber and few or no pockets of high resin density. The use of the fabric insert 302 permits the corners 1102 to include a substantially uniform fiber density that would have otherwise included a resin filled gap without the use of the fabric insert 302. Because the corners 1102 include substantially uniform fiber density, the flanges have excellent resistance to both tensile and compressive stresses, wherein the stresses are transferred to the fiber reinforcement and the substantial absence of pockets of resin allow the transfer to occur without cracking.

Holes 1105 are machined into the flange 1101 to allow fasteners to attach the composite containment duct 1100 to other bodies. Flanges 1101 provide a surface to which composite containment duct 1100 may be attached to another body. Another body may include a second composite containment duct 1100. The attachment of two containment ducts has the advantage of additional length and the ability to create ducts that have converging and diverging duct areas. In this embodiment, a composite containment duct 1100 has a tapered duct body 1103, wherein the diameter of the duct at one flange is larger than the diameter of the duct at the other flange. The strong flanges 1101, formed from the process of the present invention, permit a plurality of components to be attached to each other to form large parts. In some containment duct applications, a containment duct having both a converging portion and a diverging portion is desirable. To form a containment duct 1100 that converges in one portion and diverges in another portion, a tapered containment duct 1100 is attached by the flanges at the end of the containment duct having the smaller duct diameter to a second substantially identical tapered containment duct 1100. Attachment of the flanges at the smaller duct diameter permits a duct that diverges from one end of the combined containment duct to the center and diverges from the center of the combined containment duct to a second end of the combined containment duct. The flanges may also be fastened to a portion of a gas turbine engine (not shown). The strong flanges 1101, formed from the process of the present invention, permit a plurality of components to be attached to each other to form large parts. In one embodiment, the flanges may be fastened to the gas turbine engine so that the fan blades (not shown) of the gas turbine engine are positioned in the interior portion 1107 of the duct body 1103 substantially along the outer periphery of the path of the fan blade tips to provide containment of the fan blades.

The flanges 1101 of the containment duct 1100 of embodiments of the present invention have high strength. One contributing factor for high strength is the fact that the flanges 1101 are formed as an integral part of the containment duct 1100. Additionally, the fibers within the flange 1101 are pulled taut, providing substantially alignment and increased strength. Once cured, these fibers remain aligned and provide excellent containment properties. Additionally, the matrix distribution within the containment duct is substantially uniform across the duct body 1103 and across the flanges 1101. The substantially uniform distribution within the flanges 1101 contribute to the high strength of the flanges 1101. The flanges 1101, like the wall-portions have pre-stressed reinforcing fibers and uniform matrix distribution.

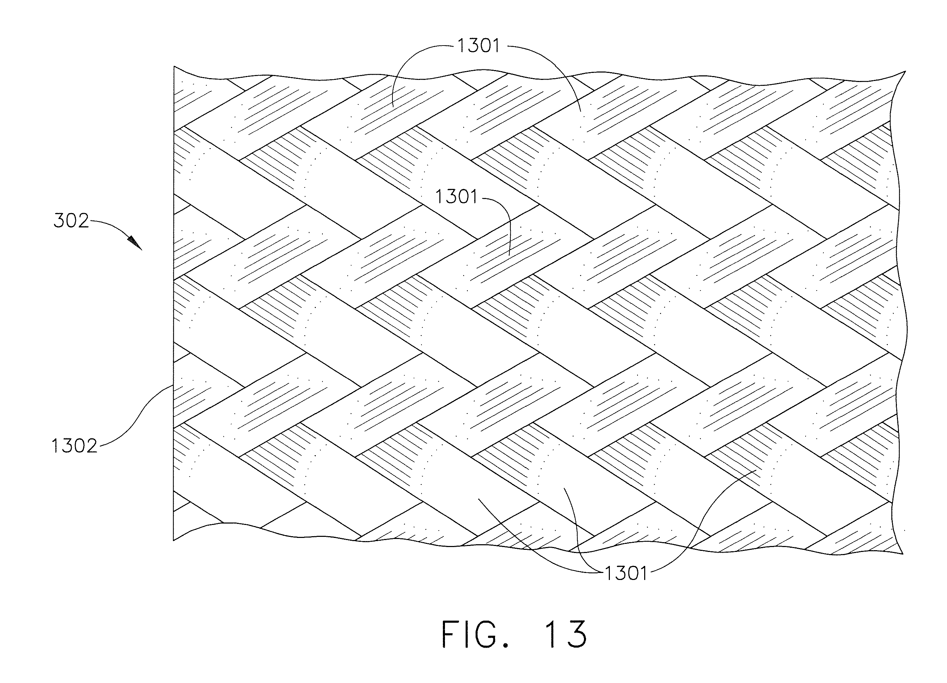

FIG. 13 shows a portion of a fabric insert 302 for use with embodiments of the present invention. Fabric insert 302 is preferably a woven fibrous material a biaxial weave in the form of a fabric segment or a fabric. As shown in FIG. 13, the fabric insert 302 has a woven structure. Preferably the fabric insert 302 has two independent tows 1301, made up of a bundle of fibers woven so as to have orientations substantially 45° angles to each other. Suitable fibers for forming the fiber fabric insert 302 include, but are not limited to, carbon, graphite, glass and polyamide fibers. The fibers making up the fabric insert 302 are preferably graphite fibers woven into a biaxial fabric. The particular weave may be any weave or configuration that permits expansion of a portion of the fabric insert 302 such that fibers may be provided to areas of lacking the presence of fiber or have low fiber density. The fabric insert 302 may includes two 3k (i.e., 3,000 strand) fiber bundles in the + 45° direction from a central axial direction and two 3k fiber bundles in the - 45° direction from the tow in the axial direction. The portion of the fabric insert 302 shown in FIG. 13 includes a cut edge 1302 that is formed by providing matrix material or other resin material sufficient to immobilize, or tackify the fibers contained therein. The immobilization ceases upon heating of the material due to the reduced viscosity of the matrix material, wherein the tows 1301 expand by unraveling or by other expansion mechanisms to fill areas adjacent to the fabric insert 302. The expansion preferably is greatest at or near the cut edge 1302 and less in the bulk portion of the fabric insert 302. The expansion results in a controlled fiber distribution in the area adjacent to the cut edge 1302

The tool 100 is fabricated from a material having a coefficient of thermal expansion greater than the coefficient of thermal expansion of the fiber fabric preform 301. One criterion for selection of the tool material is the amount of tension desired in the fiber fabric preform 301. The greater the tension desired, the greater the coefficient of thermal expansion should be for the tool material. The less tension desired, the less the coefficient of thermal expansion should be for the tool material. Preferably, the tool 100 is fabricated from a metallic material. Fibers that make up the fiber fabric preform 301 and fabric insert 302 have a relatively low coefficient of thermal expansion when compared to metallic materials. Therefore, when the tool 100 is exposed to heat, the tool material expands at a rate much faster than the rate of expansion for the fiber fabric preform 301. The tension created by the expansion of the tool 100 in relation to the expansion of the fiber fabric preform 301 acts to pull the fiber fabric preform 301 taut and substantially aligns the fibers to produce a high strength, uniform composite substantially devoid of waves and wrinkles. The greater the thermal expansion of the tool 100 in relation to the fibers, the greater the tension created. Suitable materials for fabrication of the tool 100 include, but are not limited to, aluminum and steel.

The fiber fabric preform 301 for the composite matrix is preferably woven fiber fabric. The fiber fabric is a preform capable of forming a reinforced matrix composite. A variety of fibers are suitable for use in composite matrix materials 601. The fibers may be woven or plied upon each other to form a composite preform. In one embodiment of the invention, the fiber fabric preform 301 is a triaxial woven fabric of strand bundles. The triaxial woven fabric has one strand bundle running axially, with another stand bundle oriented at about + 60° from the bundle in the axial direction and a third strand bundle oriented at - 60° from the bundle in the axial direction. Suitable fibers for forming the fiber fabric preform 301 include, but are not limited to, carbon, graphite, glass and polyamide fibers. The fibers are preferably graphite fibers. The fabric may include, but is not limited to triaxial graphite fiber. A preferred fiber fabric preform 301 includes the triaxial graphite fiber with a 24k (i.e., 24,000 strand) bundle tow in the axial direction and two 12k (i.e., 12,000 strand) bundles in the + 60° direction from the tow in the axial direction and two 12k bundles in the- 60° direction from the tow in the axial direction. The orientation of the fibers is preferably such that a weave is provided and the fibers are capable of being pulled taut prior to curing. The fiber fabric preform 301 is preferably dry. By dry, it is meant that there is no matrix material impregnated into the fiber fabric prior to loading the fiber fabric preform 301 onto the tool 100. The fiber fabric perform 301 may be the same or different than the fabric insert 302.

The matrix material 601 for use in the reinforced matrix composite of various embodiments of the present invention is a curable material that forms a high strength matrix composite when reinforced with reinforcing fibers. Suitable matrix materials 601 for use in the reinforced composite material of the present invention include, but are not limited to, epoxy and polyimide.

In one embodiment of the invention, the tool 100 preferably has a preselected geometry of a spool. The spool shape includes a substantially cylindrical body 105 affixed to two endplates 101 and 103. At least one of the two endplates 101 and 103 is fastened to the body and is detachable. In this embodiment of the present invention, the tool 100 is oriented with the endplates 101 and 103 positioned having their planar surfaces oriented vertically in order to load the tool 100 with the reinforcing fiber material. The graphite fiber fabric preform 301 is positioned around the body 105 of the spool. A flange portion 305 of the preform is positioned along the length of each of endplates 101 and 103. The flange portion 305 of the fabric extending along the first and second endplates 101 and 103 forms a flange-like shape.

Another embodiment of the present invention includes providing a tool 100 having a surface having the shape of the desired composite. In one embodiment of the invention, the body 105 is substantially the shape of a cylindrical containment duct. In this embodiment, the cylindrical duct preferably tapers inward toward the center axis of the body 105. The shape of the finished reinforced matrix composite is not limited to substantially cylindrical shapes. Any shape having flanged outer edges may be fabricated by the method of the present invention. Suitable shapes, in addition to the substantially cylindrical ducts, include, but are not limited to, ducts having complex cross-sectional geometry (e.g., rectangular ducts, triangular ducts or oval ducts), flat panels, and other complex shapes having wall-structures. Additionally, wall-structures having features may be formed using the tool 100 and method of the present invention. The tool 100 of the present invention, likewise, has body 105 of substantially the same shape as the finished composite.

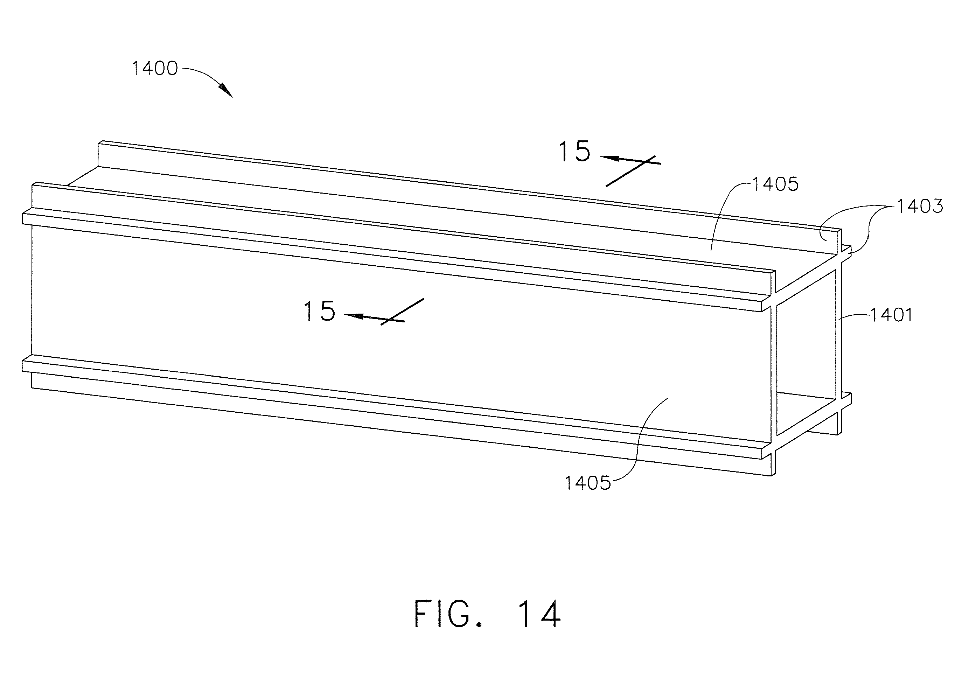

FIG. 14 shows an example of an alternate shape that may be formed using the method of the present invention. The geometry shown is a square duct 1400 having a plurality of flanges 1403 from the corners of body 1401. The tooling utilized to form the square duct 1400 includes similar tooling, as shown in FIGs. 1-2 with surfaces configured to provide a square duct, wherein the body 105 may be stretched using thermal expansion to align the reinforcing fibers. Although FIG. 14 shows a square duct, rectangular, oval any other geometry may be used. Likewise, the configuration of flanges 1403 may be any configuration that provides support for the duct and may include, but are not limited to, corner flanges, tab flanges, or mid-surface flanges. Also, any number of flanges 1403 may be formed.

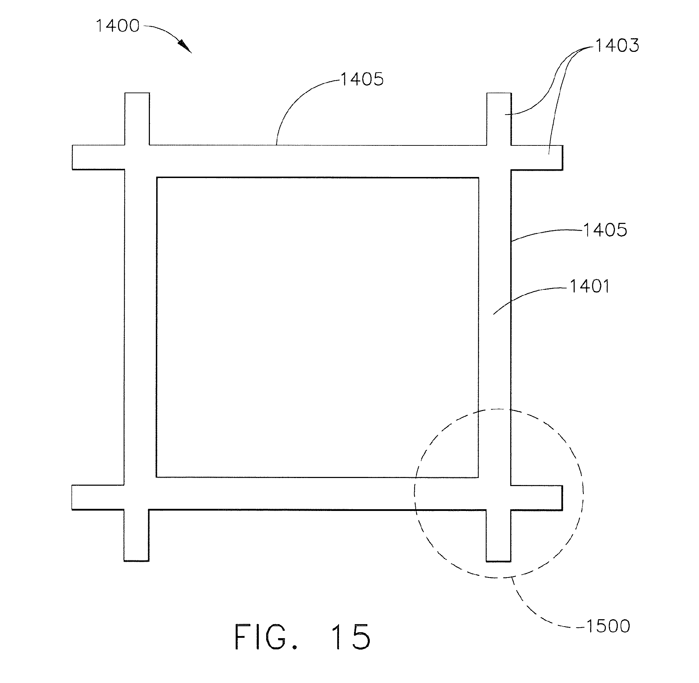

FIG. 15 shows a cross-section view along line 15-15 in FIG. 14. The flanges 1403 extend from body 1401 at substantially right angles to duct surfaces 1405. The arrangement of flanges permits attachment to gas turbine engines or other articles in a variety of configurations.

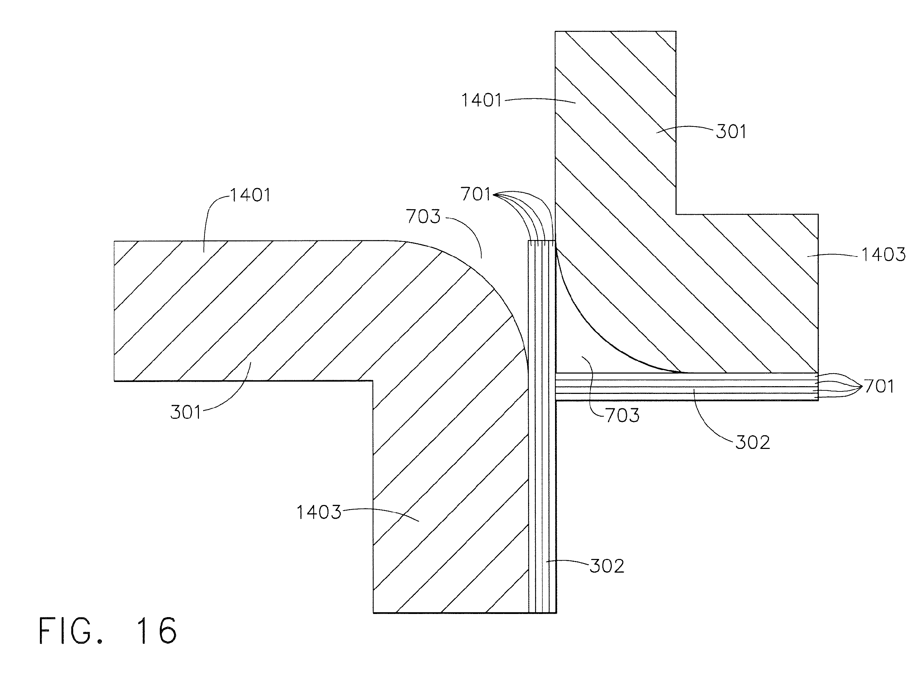

FIG. 16 shows an exploded view of area 1500 from FIG. 15 prior to heating. In FIG. 16, the fiber fabric preform 301 and fabric insert 302, include plies 701 that are positioned to form flanges 1403. The flanges are at angles equal to about 90°, but may also be at any angle. The angle at which the preform is positioned forms gaps 703.

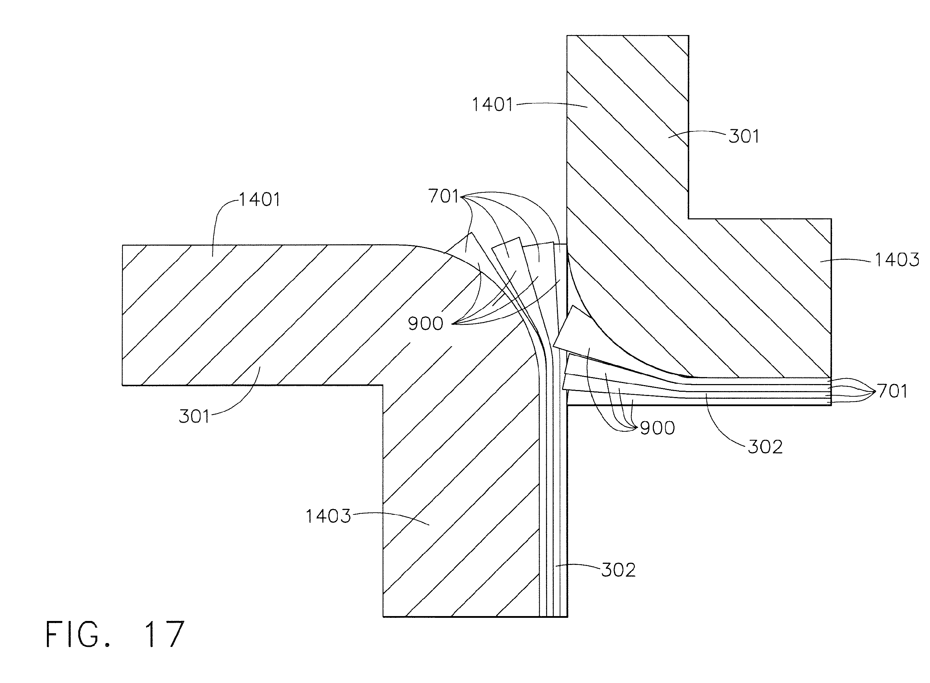

FIG. 17 shows an exploded view of area 1500 from FIG. 15 during and after heating. In FIG. 17, the fabric insert 302 expands to fill gaps 703 with unraveled fiber 900. The unraveled fiber sufficiently fill the gap 703 with fiber to provide substantially uniform distribution of fiber within the matrix material.

The method and tool 100 of various embodiments of the present invention are capable of fabricating large parts having flanges strong enough to support large parts and allow the large parts to maintain their containment properties, even under severe stresses. The tool 100 and method of various embodiments of the present invention are particularly suitable for fabrication of parts having large wall-structures, including cylindrical parts having a diameters of about 5 feet or greater, including cylindrical parts having a diameter of about 10 feet or greater. In one embodiment, the tool may create a cylindrical part having a diameter of about ten feet or greater that maintain substantially uniform matrix distribution, strong flanges resistant to compression and tensile stresses and the low void content.

The product made by the process of various embodiments of the present invention may include fan casings, as described above, but may also include other components useful with a gas turbine engine. For example, alternate components may include structural and non-structural casings, ducts and/or vanes. Preferably, components according to the present invention include annular geometries.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for making a composite gas turbine engine component comprising:
providing a tool (100) having a first and second surface, the first and second surface arranged at an angle to each other;
applying a fibrous segment (302) to the first surface, the fibrous segment (302) having an end terminating adjacent to the angle between the first surface and the second surface;
positioning a fibrous preform (301) on the fibrous segment (302) and on the second surface;
providing a matrix material (601) on one or more of the fibrous preform (301) or the fibrous segment (302);
heating the fibrous segment (302) and fibrous preform (301) to a temperature sufficient to allow expansion of the end of the fibrous segment (302); and
curing the matrix material to form a composite article having an angular portion having substantially uniform fiber distribution.

2. The method of claim 1, further comprising immobilizing fibers on the fibrous segment (302) and cutting the fibrous segment (302) prior to applying to the first surface.

3. The method of claim 1 or claim 2, wherein the fibrous segment (302) is a biaxial fabric.

4. The method of any preceding claim, wherein the fibrous segment (302) is a biaxial fabric segment.

5. The method of any preceding claim, wherein applying a plurality fibrous segment (302) includes applying a plurality of fibrous segments (302).

6. The method of any preceding claim, wherein the angular portion includes a flange.

7. The method of any preceding claim, wherein the first surface is configured into a cylindrical geometry.

8. The method of any preceding claim, wherein the first surface is configured into a rectangular geometry.

9. The method of any preceding claim, wherein the composite article is a gas turbine engine fan casing.

10. The method of any preceding claim, wherein the composite article is a structural or a non-structural component selected from the group consisting of casings, vanes and ducts.
